# EUROPEAN PATENT APPLICATION

(11) **EP 1 662 294 A1**
(43) Date of publication of application: **31.05.2006**
(21) Application number: 04425890.3
(22) Date of filing: 25.11.2004
(51) Int. Cl.: G02C 5/22, G02C 1/02

(54) **Eyeglasses comprising temples articulated through bores**

(71) Applicant: INTERCAST EUROPE S.P.A., 43100 Parma (IT)
(72) Inventor: Zarino, Riccardo, c/o Istituto Europeo di Design, 20141 Milano (IT)
(74) Representative: Giovannini, Francesca

(57) **Abstract**

A pair of eyeglasses (1, 101) comprising an eyeglass body (2) and a pair of temples (3a, 3b; 103a, 103b) articulated to the body (2) between an open position and a closed position is described, in which a first and a second temple seat (4a, 4b) are defined in the eyeglass body (2). Each temple seat (4a, 4b) includes at least one through opening (9a, 10a, 9b, 10b; 109a, 109b) at respective opposite coupling portions (8a, 8b) of the eyeglass body (2), each of the openings (9a, 10a, 9b, 10b; 109a, 109b) being provided with a first and with a second opposite stop surfaces (11, 12) to stop the temples (3a, 3b; 103a, 103b) at the aforementioned open and closed positions.

In the eyeglasses (1, 101) of the invention it is advantageously possible to articulate the temples (3a, 3b; 103a, 103b) directly to the eyeglass body (2) without using intermediate fastening elements, with a reduced number of components of the eyeglasses and consequent reduction of the assembly time and of the production costs with respect to the eyeglasses of the prior art.

## Description

### Field of the invention

The present invention refers to eyeglasses comprising an eyeglass body and a pair of temples articulated to such a body between an open position and a closed position.

In the present description and in the subsequent claims, the expression "eyeglass body", is used to indicate the optical part (comprising a lens or two lenses associated with each other) and, if present, the edge of the frame intended to support the optical part.

The present invention is applicable both to ophthalmic eyeglasses and to non-ophthalmic eyeglasses, such as sunglasses.

### Prior art

Eyeglasses are known which comprise an eyeglass body and a pair of temples articulated to the eyeglass body between an open position, or operative position, at which each temple is arranged substantially perpendicularly to the plane defined by the eyeglass body, and a closed position, or non-operative position, at which each temple is folded substantially parallely to the plane defined by the eyeglass body so as to minimise the size of the eyeglasses.

In order to articulate the temples to the eyeglasses, a first kind of eyeglasses of the prior art generally comprises a pair of articulation hinges arranged at opposite sides of the eyeglass body. As is known, each hinge is provided with an articulation pin by means of which the respective temple is hinged to a fastening element fixed to the eyeglass body. The fastening element can be fixed to the edge of the frame or, if there is no frame, to the lens, generally by means of a screw or of another means suitable for the purpose. Although substantially achieving the purpose, the eyeglasses of such a first known kind possess a series of drawbacks which have not been overcome to date, the most important of which is the excessive number of components and the tendency to wear and, more specifically, the tendency of the fastening screws and of the articulation pins to loosen, with a consequent instability of the temples movement or even with a loss of the screws and/or of the pins and consequent detachment of the temples from the eyeglass body.

Such drawbacks are particularly hard felt whenever the fastening element is directly fixed to the lens. To this end, in fact, the lens is perforated close to one of its edges to form a threaded opening intended to receive the fastening screw. Such perforation is an extremely delicate operation which renders burdensome the assembly procedure of the eyeglasses and, along therewith, the respective production costs. Additionally, the fastening of the temple to the lens in the threaded opening involves the creation of strains concentrated at the fastening point, which weaken the lens at such a region. Moreover, whenever it becomes necessary to replace the lens or the temples, the loosening operation of the fastening screw can strip the threaded opening.

In order to articulate the temples to the eyeglasses, in particular in the case of frameless eyeglasses, a second kind of eyeglasses of the prior art foresees, as an alternative to the hinges, to fasten each of the temples to the respective lens by means of a pair of pins arranged at a free end of the temple and intended to be received in corresponding fastening sleeves forced into respective through holes formed in the lens. In order to allow the temples to be arranged in closed position, the temples are made of an elastically deformable material. Despite this last feature, the number of components is on the one hand still excessive and, on the other hand, the temples are unable to close completely, in other words to lie completely parallel to the eyeglass lenses. In other words, in the closed position such a kind of known eyeglasses is unable to take up the configuration of minimum size.

### Summary of the invention

The Applicant has perceived the need to provide a pair of eyeglasses comprising an eyeglass body and a pair of temples articulated to such a body between an open position and a closed position, wherein the temples are articulated to the eyeglass body in a way that is mechanically simple, stable and effective in time.

More specifically, the Applicant has perceived the need to provide a pair of eyeglasses of the aforementioned kind wherein the articulation of the temples with respect to the eyeglass body can be achieved without making use of hinges or of intermediate fastening elements, so as firstly to keep the number of components constituting the eyeglasses as low as possible and, secondly, to avoid the aforementioned wear phenomena which affect the eyeglasses of the prior art.

The Applicant has found that it is possible to articulate the temples to the eyeglass body without the use of intermediate elements between the temples and the eyeglass body by arranging, in the eyeglass body, a first and a second temple seat each of which includes at least one through opening provided with a first and with a second opposite stop surfaces to stop the temples at the open position and, respectively, at the closed position of the temples. In such a way, a first and a second lateral surface of the end portions of each temple can advantageously abut against the aforementioned first and, respectively, second stop surfaces of the opening of the temple seat. Thanks to such features, each temple is rotatably mobile along an arc of circumference of predetermined angle the value of which is essentially determined by the inclination of the stop surfaces of the corresponding temple seat.

According to a first aspect thereof, the present invention therefore provides a pair of eyeglasses comprising an eyeglass body and a pair of temples articulated to said body between an open position and a closed position, wherein said temples are articulated to said body at respective opposite coupling portions of the eyeglass body in which a first and a second temple seat are defined, each seat including at least one through opening provided with a first and with a second opposite stop surfaces to stop said temples at said open position and, respectively, at said closed position.

Thanks to such structural features of the eyeglasses of the invention, and in particular thanks to the assembly of the temples in an articulated manner directly to the eyeglass body at a pair of through openings provided with opposite stop surfaces formed in the eyeglass body, the temples are advantageously articulated without using intermediate fastening elements, with a reduction of the number of eyeglass components and consequently a reduction of the assembly time and production costs with respect to the eyeglasses of the prior art. Additionally, the eyeglasses of the invention are advantageously less subject to wear than the eyeglasses of the prior art since they do not make use of intermediate fastening elements, in other words of the very same components, such as the hinges, which have most markedly suffered from undesired wear phenomena in the prior art.

In particular, by arranging a pair of through openings in the eyeglass body, each provided with a first and with a second lateral stop surface opposite to each other, and by mounting each temple in an articulated manner on the eyeglass body at such through openings about a substantially vertical rotation axis, the temples can advantageously be rotated about the aforementioned rotation axis between an open position at which the temples, in particular first lateral surfaces of the respective end portions thereof, abut against the first stop surfaces of the openings and between a closed position at which the temples, in particular second lateral surfaces of the respective end portions thereof, abut against the second stop surfaces of the openings.

The value of the angle of rotation which the temples can be subjected to is determined by the configuration of the stop surfaces of the through openings formed in the eyeglass body and by the configuration of the lateral surfaces of the temples portions intended to cooperate with such openings. More specifically, should such portions of the temples be provided with symmetrical opposite lateral surfaces, for example flat surfaces substantially parallel to each other, the stop surfaces of the openings are preferably tapered, the value of the angle of rotation which the temple can be subjected to between the extreme open and closed positions being determined by the inclination of the stop surfaces of the openings.

Alternatively, the portions of the temples intended to cooperate with the openings formed in the eyeglass body can be tapered, in which case the stop surfaces of the openings can be arranged substantially parallely to each other.

Preferably, the portion of each temple intended to cooperate with the stop surfaces of the openings is provided with substantially parallel lateral surfaces and each of the openings is tapered, preferably towards the inner side of the eyeglass body, so that the opposite stop surfaces of the opening define therebetween an angle of predetermined size. Such an angle is preferably comprised between about 50° and about 90°, more preferably between about 60° and about 80° and, even more preferably, between about 65° and about 75°.

In the present description and in the subsequent claims, the expressions "inner side of the eyeglasses", "inside the eyeglasses" and similar terms, are used to indicate the side of the eyeglasses intended to face the person wearing them. Vice-versa, the expressions "outer side of the eyeglasses", "outside the eyeglasses" and similar terms, are used to indicate the side of the eyeglasses opposite the aforementioned inner side.

Normally, the eyeglass body comprises a concave lens or a pair of concave lenses: in such a case, the curvature of the lens (of the lenses) allows an inner surface of each lens to be defined on the concave side of the lens and an outer surface of each lens to be defined on the convex side of the lens.

According to a preferred embodiment of the eyeglasses of the invention, the eyeglass body comprises a pair of lenses and the temple seats are arranged in opposite lateral coupling portions of the lenses.

Alternatively, the eyeglass body comprises a single lens and the temple seats are arranged in opposite lateral coupling portions of the single lens.

The lens (lenses) is (are) preferably made of a transparent elastomeric polyurethane material.

A lens made of such a kind of material is advantageously elastic, so as to be capable of undergoing an elastic deformation in response to a stress, and to return to the original configuration when the stress has ended. Moreover, a lens made of an elastomeric polyurethane material is advantageously wear resistant, which allows to manufacture eyeglasses having an extended useful life with respect to the eyeglasses of the prior art.

Examples of preferred elastomeric polyurethane materials are the materials with high impact resistance described in US patents n. 5 962 617 and n. 6 127 505, both issued to Simula Inc.. Thus, for example, as described in US patent n. 5 962 617, the elastomeric polyurethane material can be produced from a prepolymer obtained by reaction of a glycol polyester having an average molecular weight of 600-1200 with 4,4'-methylene-bis(cyclohexylisocyanate) in a an equivalent ratio of NCO comprised between 2.5 and 4.5 for each OH. The prepolymer is preferably reacted with an aromatic diamine, such as for example 4,4'-methylenebis(3-chloro-2,6-diethylaniline), in an equivalent ratio comprised between 0.95 and 1.02 NH₂/1.0 NCO.

The material commercially available under the name NXT™ or Trivex™, a transparent polyurethane polymer obtained by reacting a specific polyurethane prepolymer with an aromatic diamine, in particular diethyltoluenediamine (DEDTA), is particularly preferred. The polyurethane prepolymer preferably used is obtained from the reaction of an aliphatic diisocyanate, in particular 4,4'-methylene-bis(cyclohexylisocyanate) (HMDI), with polycaprolactone diols - having equivalent weights of 200, 375 and 2000, respectively - and a triol, in particular trimethylolpropane. Lenses manufactured with this kind of material are, for example, produced by Hoya (Japan), Younger Optics (USA), Intercast Europe (Italy).

Such preferred polyurethane polymers advantageously allow to manufacture lenses by casting, thus avoiding the creation of excessive internal stresses (which are inevitably encountered in lenses normally produced by high-pressure injection). Moreover, the lenses consisting of such preferred materials advantageously have high optical homogeneity, as well as improved thermal and mechanical resistance.

As an alternative to the materials of the polyurethane type, other kinds of materials can be used to manufacture the lenses, such as for example polyol-allyl-carbonates, polyacrylates and polymethylmetacrylates, aromatic polycarbonates, polystyrene, cellulose esters, saturated and unsaturated polyesters, transparent polyamides, and mixtures thereof.

Amongst these, diethyleneglycol-bis-allyl-carbonate or CR39™, a material commonly used to manufacture eyeglass lenses (either ophthalmic or non ophthalmic), is preferred.

According to a preferred embodiment of the eyeglasses of the invention, the eyeglass body comprises a frame and the aforementioned temple seats are arranged in opposite lateral coupling portions of the frame. In particular, the temple seats are preferably formed in opposite lateral coupling portions of the frame edge which surrounds and supports the optical part.

Thanks to such a feature, it is not necessary to perforate the lenses of the eyeglass body to form the temple seats, so that conventional optical materials can advantageously be selected to manufacture the lenses, even materials which are not resistant from the mechanical point of view provided that they are capable to impart to the optical part the desired optical properties, thus limiting the use of mechanically resistant materials preferably just to manufacture the frame.

Preferably, particularly if the openings of the temple seats are tapered towards the inner side of the eyeglass body, the portions of the temples which are intended to cooperate with the coupling portions of the eyeglass body are preferably substantially U-shaped, so as to advantageously arrange the temple portions intended to rest on the ears on the inner side of the eyeglasses.

According to a first preferred embodiment of the eyeglasses of the invention, each of the aforementioned first and second temple seats comprises a pair of substantially circular through openings and each of the temples is essentially wire-shaped. In particular, the two openings of each temple seat are preferably arranged along the same vertical plane and the temples preferably consist of a wire, for example made of metal, bent in such a way as to hinge the temple in the respective seat. In such a way, essentially three wire portions can preferably be defined in each wire-shaped temple, a first wire portion extending between the two openings of the temple seat and two second wire portions, substantially perpendicular to the first wire portion and substantially parallel to each other, extending from each opening of the temple seat.

Should each of the openings of the temple seats be tapered towards the inner side of the eyeglass body, the aforementioned first wire portion is preferably arranged on the inner side of the eyeglasses. In such a case, the portions of the temples intended to cooperate with the coupling portions of the eyeglass body are preferably substantially U-shaped.

Alternatively, should each of the openings of the temple seats be tapered towards the outer side of the eyeglass body, the aforementioned first wire portion is preferably arranged on the outer side of the eyeglasses.

Preferably, the free ends of the aforementioned second wire portions are brought close to each other and kept in this position by means of a closing sleeve, preferably arched so as to adapt the temple, in a way known *per se,* to the anatomy of the ear.

According to a second preferred embodiment of the eyeglasses of the invention, each of the seats comprises a single through opening and each of the temples comprises an end portion intended to cooperate with the respective coupling portion including an enlarged element with respect to the opening to hinge the temple in the respective seat.

Thanks to such a feature, and in particular thanks to the arrangement of the enlarged element at the end portion of each temple intended to cooperate with the respective coupling portion of the eyeglass body, there is an interference between the enlarged element and the respective opening of the temple seat which allows to hinge the temples to the eyeglass body in a simple and direct manner, i.e. without intermediate fastening elements.

Preferably, each of the openings of the temple seats is substantially quadrangular and the enlarged element is preferably substantially cylindrical or spherical.

Preferably, the enlarged element is integrally formed with the temple.

In particular, if the opening of the temple seat is tapered, the enlarged element is of a size such as to interfere with the eyeglass body at the minimum dimension of the opening which, as described earlier, is preferably arranged on the inner side of the eyeglass body.

If the tapering of the opening faces the inner side of the eyeglass body, each temple is provided with a portion intended to cooperate with the respective coupling portion of the eyeglass body which is preferably substantially U-shaped. Each temple is inserted inside the respective opening of the eyeglass body through its own free end from the inner side of the eyeglass body until the enlarged element of the temple interferes with the eyeglass body on the inner side thereof.

On the other hand, if the tapering of the opening faces the outer side of the eyeglass body, in other words if the minimum dimension of the opening is arranged on the outer side of the eyeglass body, each temple is provided with an end portion intended to cooperate with the respective coupling portion of the eyeglass body which is preferably inclined according to a predetermined angle with respect to the remaining portion of the temple and is inserted inside the respective opening of the eyeglass body through its free end from the outer side of the eyeglass body until the enlarged element of the temple interferes with the eyeglass body on the outer side thereof.

According to a preferred embodiment of the eyeglasses of the invention, the enlarged element is not integrally formed with the temple, but is removable. In such a case, the enlarged element can advantageously be associated to the temple, in particular to its end portion intended to cooperate with the respective coupling portion of the eyeglass body, after the insertion of the temple in the respective seat, so as to advantageously allow the disengagement of the temple from the respective seat by simply removing the enlarged element.

Preferably the temples are made of an elastically deformable material.

Thanks to such a preferred feature, the temples can advantageously be subjected to a thermal or mechanical stress and return to the original configuration when the stress has ended.

Preferably, each of the coupling portions of the eyeglass body comprises, in addition to one or more openings as described above, also a lateral surface of the eyeglass body (i.e. of the lens or, if present, of the frame), which lateral surface is intended to interfere with a lateral portion of the respective temple so as to removably lock the temple in said open position.

In particular, as described above, by arranging the enlarged element on the inner side of the eyeglasses and by shaping as a U the portion of each temple intended to cooperate with the respective coupling portion of the eyeglass body so as to maintain a predetermined degree of interference with the lateral surface of the lens or, when a frame is present, with the lateral surface of this frame, the temples cooperate in abutment relationship with the respective lateral surfaces of the eyeglass body (of the lenses or of the frame) at the open position thereof.

In this way, it is advantageously possible to securely, although removably, lock each temple in the open position, in the sense that at the open position a first lateral surface of the temple abuts against the first stop surface of the temple seat. In such a case, it is sufficient in order to pass from the open position to the closed position of each temple, that the latter be slightly deformable so as to advantageously allow the temple to pass beyond the respective lateral surface of the eyeglass body so as to allow the rotation of the temple until a second lateral surface of the temple, opposite the first, abuts against the second stop surface of the temple seat.

In order to render the maintenance of the open position of each temple even more secure and reliable, the temple can advantageously be provided with an undercut portion intended to cooperate in abutment relationship with the lateral surface of the lens (or of the frame) once the open position has been reached by the temple. Also in this case, the feature that the temples are made of an elastically deformable material advantageously allows an easy disengagement of the undercut of the temples from the lateral surfaces of the lenses (or of the frame).

In order to further extend the useful life of the eyeglasses without necessarily having to use particularly resistant materials for the eyeglass body, each of the aforementioned lateral surfaces of the eyeglass body is preferably coated with a layer of wear-resistant protective material, for example a metal one.

### Brief description of the figures

Additional features and advantages of the invention shall become more clearly apparent from the following description of some embodiments of the invention, provided hereinafter for indicating and not limiting purposes with reference to the attached drawings, in which:
- Figure 1 is a perspective view of a pair of eyeglasses according to a first preferred embodiment of the invention;
- Figure 2 is a top view in partial cross-section of a portion of the eyeglasses of Figure 1, in an open position of the eyeglasses;
- Figure 3 is a top view in partial cross-section of a portion of the eyeglasses of Figure 1, in a position close to the closed position of the eyeglasses;
- Figure 4 is a partial perspective view of a pair of eyeglasses according to a second preferred embodiment of the invention;
- Figure 5 is a perspective view of a portion of the eyeglasses of Figure 4;
- Figure 6 is a top view in partial cross-section of a portion of the eyeglasses of Figure 4, in an open position of the eyeglasses;
- Figure 7 is a top view in partial cross-section of a portion of the eyeglasses of Figure 4, in a closed position of the eyeglasses.

### Detailed description of the preferred embodiments

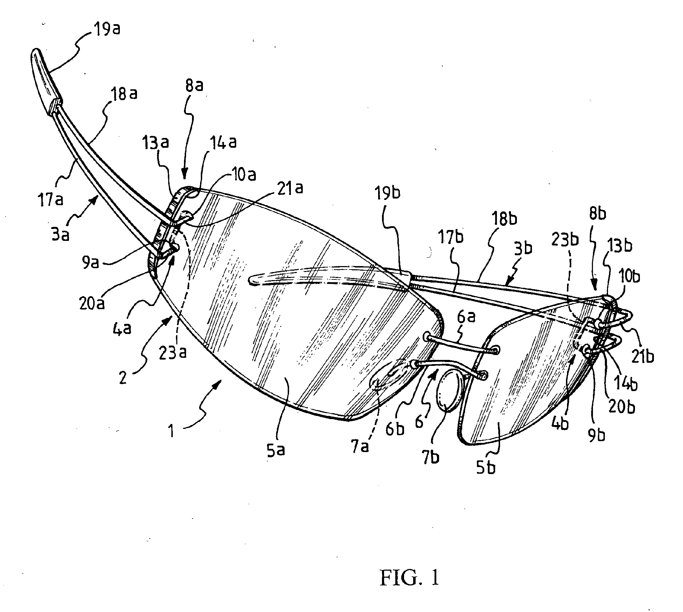

With reference to Figures 1-3, a first embodiment of the eyeglasses of the invention, for example a pair of sunglasses, is generally indicated at 1.

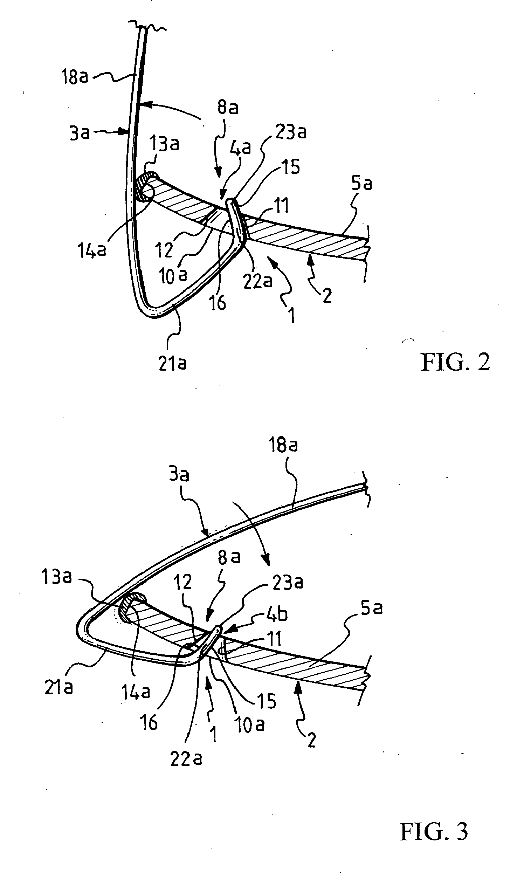

According to the invention, the eyeglasses 1 comprises an eyeglass body 2 and a pair of temples 3a, 3b, which in the embodiment illustrated in Figure 1 are wire-shaped and made of metal, such as for example steel, titanium or another metal suitable for the purpose. The temples 3a, 3b are articulated to the body 2 between an open position or operative position (the position taken up, for example, by the temple 3a illustrated in Figs. 1 and 2), and a closed position or non-operative position (the position taken up, for example, by the temple 3b illustrated in Fig. 1), at which the eyeglasses 1 take up the configuration of minimum size. In particular, each of the temples 3a and 3b comprises a bent metal wire including two lower 17a and upper 18a and, respectively, lower 17b and upper 18b first portions, extending along a first predetermined direction, kept close to each other at their free ends by a respective closing sleeve 19a, 19b intended to rest on the user's ear. Each of the temples 3a and 3b further comprises two lower 20a and upper 21a and, respectively, lower 20b and upper 21b second portions, extending along a second predetermined direction inclined according to an angle of predetermined size, preferably comprised between about 40° and about 70°, more preferably between about 50° and about 60°, with respect to the aforementioned first predetermined direction of the first portions 17a, 18a, 17b, 18b of the temples 3a, 3b.

Moreover, each of the temples 3a and 3b further comprises end portions intended to cooperate, as described in greater detail hereinafter, with a first lens 5a and, respectively, with a second lens 5b, to articulate the temples 3a, 3b with respect to the eyeglass body 2. Such end portions are provided with a first pair and, respectively, with a second pair of lateral stop surfaces 15, 16, the purpose of which shall be illustrated more clearly in the following. The end portions of the temples 3a, 3b preferably extend along a third predetermined direction inclined according to a predetermined angle, preferably comprised between 100° and about 140°, more preferably between about 110° and about 130°, with respect to the aforementioned second predetermined direction of the second portions 20a, 21a and, respectively, 20b, 21b of the temples 3a, 3b.

Figures 2 and 3 illustrate, in particular, the upper end portion 22a of the temple 3a, which nevertheless also comprises a lower end portion, not illustrated in detail.

In view of the preferred features described above, in the preferred embodiment of the eyeglasses 1 illustrated in Figures 1-3 the portions of the temples 3a and 3b intended to cooperate with the eyeglass body 2 are substantially U-shaped.

The lower and upper end portions 22a of the temple 3a are connected together by connecting portions 23a, 23b (Figure 1). As illustrated more clearly hereinafter, each of the connecting portions of the temples 3a, 3b defines the rotation axis of the respective temple 3a, 3b.

In the preferred embodiment illustrated in Figure 1, the eyeglass body 2 comprises a pair of lenses, in this case the first lens 5a and the second lens 5b, which are conventionally associated to each other by means of a bridge 6 including a pair of wires, an upper wire 6a and a lower wire 6b, preferably made of metal, even more preferably made of the same material constituting the temples 3a, 3b.

The lenses 5a, 5b are, for example, made of a transparent elastomeric polyurethane material, such as the product commercially available with the name NXT™, produced by Intercast Europe (Italy), or with the name Trivex™, produced by PPG Industries (USA).

The eyeglasses 1 further comprise a pair of nose pads to make them comfortable to wear, and to be precise a first nose pad 7a and a second nose pad 7b supported, in a way knownper se, by the free ends of the metal wire 6b of the bridge 6.

According to the invention, a first temple seat 4a and a second temple seat 4b are defined in the eyeglass body 2, which seats are arranged in opposite lateral coupling portions 8a, 8b of the lenses 5a and, respectively, 5b, each seat 4a, 4b including at least one through opening. According to the preferred embodiment illustrated in Figure 1, in which each temple 3a, 3b comprises a bent wire as described previously, each of the temples seats 4a, 4b comprises a pair of through openings, in this case an upper opening and a lower opening: in particular, the openings of the temple seat 4a are indicated with 9a (lower opening) and 10a (upper opening), whereas the openings of the temple seat 4b are indicated with 9b (lower opening) and 10b (upper opening). According to the first embodiment illustrated in Figure 1, the first and the second temple seats 4a, 4b comprise substantially circular through openings 9a, 10a and, respectively, 9b, 10b, which are capable to receive the wire-shaped temples 3a and, respectively, 3b.

As illustrated in greater detail in Figures 2 and 3, with reference to the upper opening 10a illustrated in such Figures arranged at the coupling portion 8a, the following considerations also being valid for the remaining openings not illustrated in detail, the opening 10a is provided with a first and a second opposite stop surfaces 11, 12 to stop the temple 3a at the open position and, respectively, at the closed position. The aforementioned first and second stop surfaces 15, 16 of the upper end portion 22a of the temple 3a are intended to abut against such stop surfaces 11, 12 of the opening 10a of the temple seat 4a. In particular, the opening 10a is tapered towards the inner side of the eyeglass body 2, so that the stop surfaces 11, 12 of the opening 10a define an angle of predetermined size therebetween, in the illustrated embodiment equal to about 70°.

In this way, the temple 3a is rotatably mobile about a rotation axis substantially coinciding with the connecting portion 23a, along an arc of circumference defined by a predetermined angle, which is determined by the inclination of the stop surfaces 11, 12 of the temple seat 4a, in the illustrated example equal to about 70°.

Moreover, in the preferred embodiment illustrated in Figures 1-3, each of the coupling portions 8a, 8b of the eyeglass body 2 further comprises a lateral surface 14a, 14b of the lens 5a and, respectively, 5b, intended to interfere with the respective temple 3a, 3b so as to removably lock the same in the open position. In the preferred embodiment illustrated in the aforementioned Figures, in order to improve the wear resistance, the lateral surfaces 14a, 14b are coated with respective layers 13a, 13b of a wear-resistant protective material, for example made of metal.

With reference to Figures 1-3, the way in which the temples 3a, 3b of the eyeglasses illustrated in such Figures open and close will now be illustrated.

With reference to the temple indicated with 3a in Figures 2 and 3, it will be assumed to start from a closed position - not illustrated in detail - of the temple 3a, at which the temple 3a is substantially parallel to the eyeglass body 2. In particular, at such a position, the second stop surfaces 16 of the upper end portion of the temple 3a abut against the second stop surfaces 12 of the openings 9a, 10a of the temple seat 4a. To open the temple 3a, the latter is rotated about the rotation axis of the temple (i. e. about the connecting portion 23a) according to a first direction of rotation, until the first stop surfaces 15 of the upper end portion of the temple 3a abut against the first stop surfaces 11 of the openings 9a, 10a of the temple seat 4a (Fig. 2). At such an open position, the cooperation between the first portions 17a, 18a of the temple 3a and the lateral surface 14a of the lens 5a coated by the layer 13a advantageously allows the temple 3a to be stably kept in the open position, since to move the temple 3a from such a position it is necessary to overcome the counteraction exerted by the lateral surface 14a of the lens 5a coated by the layer 13a against the temple 3a. By giving the temple 3a a rotation along a second direction of rotation opposite the first one, once such a counteraction has been overcome, which is advantageously facilitated by the fact that the temple 3a is made of an elastically deformable material, it is once again possible to move the temple 3a towards the closed position by displacing the second stop surfaces 16 of the end portions of the temple 3a towards the second stop surfaces 12 of the openings 9a, 10a of the temple seat 4a (Fig. 3).

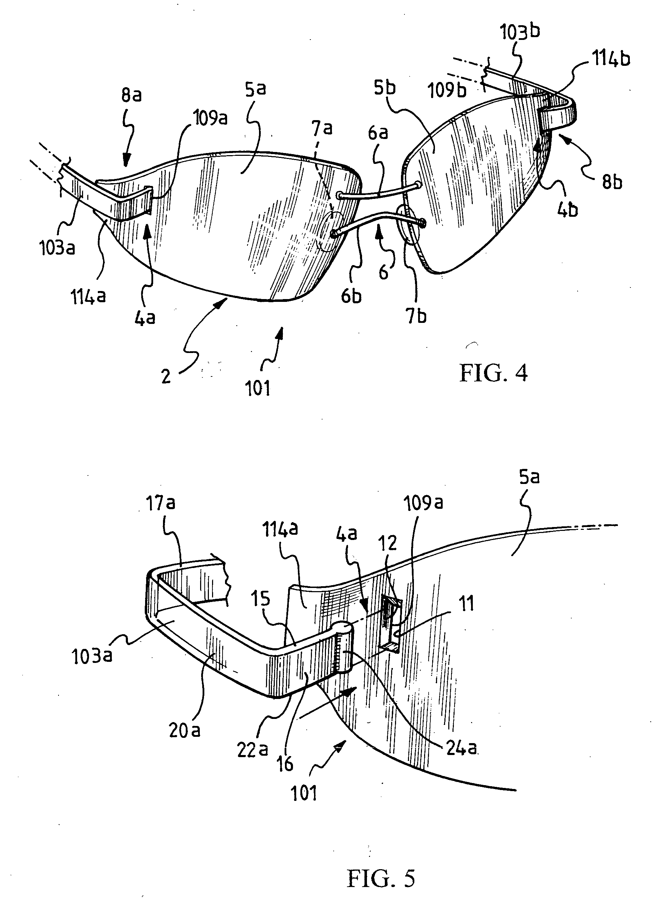

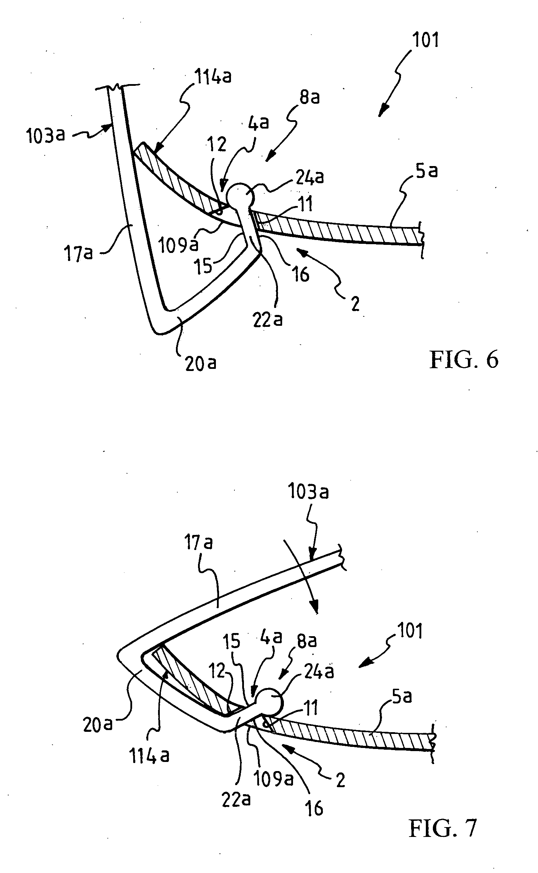

A second preferred embodiment of the eyeglasses of the invention is illustrated in Figures 4-7, in which the eyeglasses are indicated with reference numeral 101. In the following description and in such Figures, the components of the eyeglasses which are structurally or functionally equivalent to those previously illustrated with reference to Figures 1-3 shall be indicated with the same reference numerals and shall not be described any further.

According to this second preferred embodiment, the temples, indicated with reference numerals 103a, 103b, are formed by a single piece, having for example a substantially quadrangular cross section, and are preferably made of a plastic material, such as polyamide, cellulose propionate or another material suitable for the purpose. Otherwise, the arrangement of the different portions of the temples 103a, 103b of Figures 4-7 is entirely analogous to the arrangement described with reference to the metal wire temples of Figures 1-3. In other words, also in this preferred embodiment of the invention the portions of the temples 103a, 103b intended to cooperate with the eyeglass body 2, in particular with the coupling portions 8a, 8b of the body 2, are preferably substantially U-shaped. In this case, each temple seat 4a, 4b comprises just one opening 109a, respectively, 109b. In the embodiment illustrated in Figures 4-7, the openings 109a, 109b are substantially quadrangular.

As illustrated in the aforementioned Figures, each of the temples 103a, 103b comprises an end portion including an enlarged element with respect to the openings 109a, 109b to hinge the temples 103a, 103b in the respective seats 4a, 4b. In the Figures only the enlarged element of the temples 103a, indicated at 24a, is highlighted. The enlarged element 24a in the illustrated embodiment is substantially cylindrical in shape and has a size such as to interfere with the eyeglass body 2 at the minimum dimension of the opening 109a which, as described earlier, is arranged on the inner side of the eyeglass body 2.

Moreover, according to the embodiment illustrated in Figures 4-7, the eyeglass body 2 comprises bent lateral lens portions 114a, 114b intended to interfere with the lateral surfaces of the respective temples 103a, 103b so as to removably lock them in said open position. Preferably, the lateral portions 114a, 114b of the lenses 5a, 5b are chamfered, so as to ease the sliding of the temples 103a, 103b along the lenses 5a, 5b during the rotation of the temples 103a, 103b.

From what has been described and illustrated above all the advantages achieved by the invention are immediately evident and, notably, those linked to the possibility of obtaining a pair of eyeglasses consisting of a reduced number of components, with a consequent advantageous reduction of assembly time and of the production costs with respect to the eyeglasses of the prior art.

Clearly, a man skilled in the art can make modifications and variants to the invention described above in order to satisfy contingent and specific application requirements, all of which are in any case encompassed by the scope of protection as defined by the following claims. Thus, for example, the temples and the respective openings arranged in the coupling portions of the eyeglass body can be shaped according to geometries different from those described, provided that the cross section of the temples and the openings are shaped so as to ensure the correct abutting cooperation between the lateral stop surfaces of the temples and the stop surfaces of the temple seats.

## Claims

1. Eyeglasses (1, 101) comprising an eyeglass body (2) and a pair of temples (3a, 3b; 103a, 103b) articulated to said body (2) between an open position and a closed position, wherein said temples (3a, 3b; 103a, 103b) are articulated to said body (2) at respective opposite coupling portions (8a, 8b) of the eyeglass body (2) in which a first and a second temple seat (4a, 4b) are defined each seat including at least one through opening (9a, 10a, 9b, 10b; 109a, 109b) provided with a first and with a second opposite stop surfaces (11, 12) to stop said temples (3a, 3b; 103a, 103b) at said open position and, respectively, at said closed position.

2. Eyeglasses (1, 101) according to claim 1, wherein said stop surfaces (11, 12) of each of the openings (9a, 10a, 9b, 10b; 109a, 109b) define therebetween an angle of from about 50° to about 90°.

3. Eyeglasses (1, 101) according to claim 1, wherein said eyeglass body (2) comprises a pair of lenses (5a, 5b) and wherein said temple seats (4a, 4b) are arranged in opposite lateral coupling portions (8a, 8b) of the lenses (5a, 5b).

4. Eyeglasses (1, 101) according to claim 3, wherein said lenses (5a, 5b) are made of a transparent elastomeric polyurethane material.

5. Eyeglasses (1, 101) according to claim 1, wherein said eyeglass body (2) comprises a frame and wherein said temple seats (4a, 4b) are arranged in opposite lateral coupling portions of the frame.

6. Eyeglasses (1, 101) according to claim 1, wherein the portions of the temples (3a, 3b; 103a, 103b) intended to cooperate with the coupling portions (8a, 8b) of the eyeglass body (2) are preferably substantially U-shaped.

7. Eyeglasses (1) according to claim 3 or 5, wherein each of said first and second temple seats (4a, 4b) comprises a pair of substantially circular through openings (9a, 10a, 9b, 10b) and wherein each of the temples (3a, 3b) is essentially wire-shaped.

8. Eyeglasses (101) according to claim 3 or 5, wherein each of the temples (103a, 103b) comprises an end portion including an enlarged element (24a) with respect to said openings (109a, 109b) to hinge the temples (103a, 103b) in the respective seat (4a, 4b).

9. Eyeglasses (101) according to claim 1, wherein said end portions of the temples (103a, 103b) are inserted in said openings (109a, 109b) so as to arrange said enlarged elements (24a) at an inner side of the eyeglass body (2).

10. Eyeglasses (1, 101) according to claim 1 or 5, wherein said temples (3a, 3b; 103a, 103b) are made of an elastically deformable material.

11. Eyeglasses (1, 101) according to claim 10, wherein each of the coupling portions (8a, 8b) of the eyeglass body (2) comprises a lateral surface (14a, 14b; 114a, 114b) of the lens (5a, 5b) or of the frame intended to interfere with the respective temple (3a, 3b; 103a, 103b) so as to removably lock said temple (3a, 3b; 103a, 103b) in said open position.

12. Eyeglasses (1) according to claim 11, wherein each of said lateral surfaces (14a, 14b) is coated with a layer (13a, 13b) of wear-resistant protective material.
